# EUROPEAN PATENT APPLICATION

(11) **EP 1 367 432 A1**
(43) Date of publication of application: **03.12.2003**
(21) Application number: 01273609.6
(22) Date of filing: 25.12.2001
(51) Int. Cl.: G02F 2/02, H01S 3/10

(54) **OPTICAL CONTROL METHOD AND DEVICE**

(30) Priority: 30.01.2001 JP 2001022316
(71) Applicant: Maeda, Yoshinobu, Yokkaichi-shi, Mie 510-0874 (JP)
(72) Inventor: Maeda, Yoshinobu, Yokkaichi-shi, Mie 510-0874 (JP)
(74) Representative: Leson, Thomas Johannes Alois, Dipl.-Ing.
(86) International application number: JP0111329
(87) International publication number: WO02061502

(57) **Abstract**

An optical control device capable of controlling an optical signal with another optical signal, wherein a first laser light L₁ of a wavelength λ₁ and a second laser light L₂ of a wavelength λ₂ are coupled together by a first optical coupler (24) and are input to an optical amplifying element (26), and a light of the wavelength λ₂ which is extracted by an optical filtering element (29) from the output light of the optical amplifying element (26) and a third laser light L₃ of the wavelength λ₁ are coupled together by a second optical coupler (24') and are input to a second optical amplifying element (26'). A light of the wavelength λ₁ is extracted by a second optical filtering element (28) from the output light of the second optical amplifying element (26'), whereby an amplified output signal lₒᵤₜ is obtained, as shown at (a) in Fig. 10. The optical control device can generate the output light of the first wavelength λ₁, by a switching control using the first laser light L₁ of the first wavelength and the third input light of the first wavelength λ₁.

## Description

### TECHNICAL FIELD

The present invention relates to optical function elements for amplification, control or switching of optical signals, and more particularly to optical control method and device suitable for photoelectronics such as optical communication, optical image processing, optical computation, optical measurement and optical integrated circuits, which are capable of advanced information processing.

### BACKGROUND ART

There have been demanded extensive developments of broad-band services such as dynamic image communication and picture image transmission or distribution, using fiber-optic communication capable of broad-band efficient data transmission or transfer. In electronics, for example, there have not yet been realized functional elements (active elements) equivalent to triode transistors, that is, optical function elements capable of controlling an optical signal directly with another optical signal.

Actually, therefore, an optical signal that has been transmitted at a high-speed is once converted into an electrical signal, which is subjected to data processing in an electronic circuitry, and the processed data signal is then reconverted into an optical signal to be transmitted. This incapability to achieve direct control of an optical signal with another optical signal has limited the efficiency of optical signal processing. If a data signal can be processed as received in the form of an optical signal, it is considered possible to perform parallel processing operations, which are expected to permit further reduction in the required signal processing time.

### DISCLOSURE OF INVENTION

The present invention was made in the light of the background art described above. It is an object of the present invention to provide optical control method and device which permit processing of an optical signal directly with another optical signal.

In the light of the background art described above, the present inventor has made extensive studies, and found out that a spontaneous emission light generated from a fiber amplifier (optical amplifying element) doped with a rare earth element, which light has a wavelength near a wavelength λ₁ of an input light incident upon the fiber amplifier, has a response to a variation in the intensity of that input light, and that a variation in the intensity of the spontaneous emission light is reversed with respect to the variation in the signal intensity of the input light. The inventor has also found out a phenomenon that if a laser light having another wavelength λ₂ within the wavelength band of the spontaneous emission, that is, within a neighboring wavelength band of the input light, is coupled with the input light, the overall intensity of the spontaneous emission is abruptly increased while the variation in the signal (amplitude) of the spontaneous emission is maintained. Namely, the inventor has found out a laser inducted signal enhancement effect. Further, the present inventor has found out that a phenomenon similar to that described above is obtained not only in a semiconductor optical amplifying element, but also in a case where the light having the wavelength λ₂ is selectively output from the light generated within the semiconductor optical amplifying element, rather than the laser light having the wavelength λ₂ is coupled with the input light. These phenomena are considered to be wavelength conversion from the wavelength λ₁ to the wavelength λ₂. The inventor has conceived Tandem Wavelength Conversion Optical Triode, based on tandem wavelength conversion in which the wavelength conversion is effected in tandem connection, and has arrived at the optical control method and device based on this conception. The present invention was made on the basis of the findings described above.

That is, there is provided according to the invention corresponding to appended claim 1, a first optical control method comprising (a) a step of inputting a first input light of a first wavelength to a first optical amplifying element, so that a light having a wavelength within a wavelength band which includes the wavelength of said first input light and in which the first optical amplifying element has an amplification gain is intensity-modulated in response to a variation in an intensity of said first input light, (b) a step of inputting to the first optical amplifying element a laser light of a second wavelength within the wavelength band in which said first optical amplifying element has the amplification gain, (c) a step of extracting the light of the second wavelength from a light generated from said first optical amplifying element, and inputting the extracted light to a second optical amplifying element, (d) a step of inputting to said second optical amplifying element a laser light of said first wavelength or a laser light having a third wavelength within a wavelength band which includes the first wavelength and in which said second optical amplifying element has an amplification gain, and (e) a step of extracting the light of said first or third wavelength from a light output from said second optical amplifying element, and outputting the light of the first or third wavelength.

The optical control method described above is preferably practiced by an optical control device corresponding to appended claim 5, which comprises (a) a first optical amplifying element operable to receive a first input light of a first wavelength and intensity-modulate a light having a wavelength within a wavelength band which includes the wavelength of said first input light and in which the first optical amplifying element has an amplification gain, such that the light having the wavelength within the above-indicated wavelength band is intensity-modulated in response to a variation in an intensity of the first input light, (b) a first optical inputting element operable to input to said first optical amplifying element a laser light of a second wavelength within the wavelength band in which the first optical amplifying element has the amplification gain, (c) a first optical filtering element operable to extract the light of the second wavelength form a light output from said first optical amplifying element, (d) a second optical amplifying element operable to receive the light of the second wavelength extracted by said first optical filtering element, and intensity-modulate a light having a wavelength within a wavelength band which includes said second wavelength and in which the second optical amplifying element has an amplification gain, such that the light having the wavelength within the wavelength band including the second wavelength is intensity-modulated in response to a variation in an intensity of the second input light, (e) a second optical inputting element operable to input to the second optical amplifying element a laser light of said first wavelength or a laser light of a third wavelength within the wavelength band which includes the first wavelength and in which the second optical amplifying element has the amplification gain, and (f) a second optical filtering element operable to extract the light of the first or third wavelength from a light output from the second optical amplifying element, and output the light of the first or third wavelength.

The optical control method and device described above are three-terminal control method and device capable of amplification and switching of an optical signal by using another optical signal. Namely, when the first optical amplifying element receives the second input light (laser light) of the second wavelength within the wavelength band in which the first optical amplifying element has an amplification gain to intensity-modulate the surrounding light of the first input light in response to a variation in the intensity of the first input light, the amplified light of the second wavelength is extracted and input to the second optical amplifying element. When the second optical amplifying element receives a third input light of the third wavelength (or first wavelength) within the wavelength band in which the second optical amplifying element has an amplification gain to intensity-modulate the surrounding light of the amplified light of the second wavelength in response to a variation of this amplified light, the output light of the third wavelength (or first wavelength) is generated from the optical control device. This output light is switched and amplified in synchronization with the third input light.

The object indicated above is achieved according to the invention defined in appended claim 2, that is, by a second optical control method comprising (a) a step of inputting a first input light of a first wavelength to a first semiconductor optical amplifying element, so that a light generated within the first semiconductor optical amplifying element is intensity-modulated in response to a variation in an intensity of said first input light, (b) extracting the light of a second wavelength from a light which is generated within said first semiconductor optical amplifying element and which has the second wavelength within a wavelength band in which said first semiconductor optical amplifying element has an amplification gain, and outputting the extracted light to a second semiconductor optical amplifying element, (c) a step of inputting to the second semiconductor optical amplifying element a laser light of said first wavelength or a laser light of a third wavelength within a wavelength band which includes the first wavelength and in which the above-indicated second semiconductor optical amplifying element has an amplification gain, and (d) a step of extracting the light of the first or third wavelength from a light output from said second semiconductor optical amplifying element, and outputting the light of the first or third wavelength.

The second optical control method described above is preferably practiced by an optical control device corresponding to appended claim 6, which comprises (a) a first semiconductor optical amplifying element operable to receive a first input light of a first wavelength and intensity-modulate a light having a wavelength within a wavelength band which includes the wavelength of said input light and in which said first semiconductor optical amplifying element has an amplification gain, such that the light having the wavelength within the wavelength band is intensity-modulated in response to a variation in an intensity of the first input light, (b) a first optical inputting element operable to input the light of said first wavelength to said first semiconductor optical amplifying element, (c) a first optical filtering element operable to extract a light of a second wavelength from a light which is generated within the first semiconductor optical amplifying element and which has the second wavelength within a wavelength band in which the first semiconductor optical amplifying element has an amplification gain, and output the extracted light as an output light, (d) a second semiconductor optical amplifying element operable to receive the light of the second wavelength extracted by the first optical filtering element, and intensity-modulate a light having a wavelength within a wavelength band which includes the second wavelength and in which the second semiconductor optical amplifying element has an amplification gain, such that the light having the wavelength within the wavelength band including said second semiconductor wavelength is intensity-modulated in response to a variation in an intensity of said second input light, (e) a second optical inputting element operable to input to said second semiconductor optical amplifying element a laser light of said first wavelength or a laser light of a third wavelength within the wavelength band which includes the first wavelength and in which the above-indicated second semiconductor optical amplifying element has the amplification gain, and (f) a second optical filtering element operable to extract the light of the first or third wavelength from a light output from said second semiconductor optical amplifying element, and output the light of the first or third wavelength.

The optical control method and device described above are three-terminal control method and device capable of amplification and switching of an optical signal by using another optical signal. Namely, the first optical amplifying element outputs the amplified light of the second wavelength which lies within the wavelength band in which the first optical amplifying element has an amplification gain for intensity-modulation in response to a variation in the intensity of the first input light, and the amplified light of the second wavelength is extracted and input to the second optical amplifying element. When the second optical amplifying element receives a second input light of the third wavelength (or first wavelength) within the wavelength band in which the second optical amplifying element has an amplification gain for intensity-modulation in response to a variation of this amplified light, the output light of the second wavelength (or first wavelength) is generated from the optical control device. This output light is switched and amplified in synchronization with the second input light.

The object indicated above is achieved according to the invention defined in appended claim 3, that is, by a third optical control device comprising (a) an optical amplifying element operable to receive an input light of a second wavelength and intensity-modulate a light having a wavelength within a wavelength band which includes the wavelength of said input light and in which the optical amplifying element has an amplification gain, such that the light having the wavelength within the above-indicated wavelength band is intensity-modulated in response to a variation in an intensity of said input light, (b) an optical inputting element operable to input to the optical amplifying element a light of a first wavelength within the wavelength band in which the optical amplifying element has the amplification gain, and (c) an optical filtering element operable to extract the light of said first wavelength from a light output from said optical amplifying element, and outputting the extracted light of said first wavelength as an output light.

In the optical control device, the laser light of the first wavelength is input to the optical amplifying element which is arranged to intensity-modulate the light of the wavelength within the wavelength band which has the wavelength of the input light and in which the element has an amplification gain. As a result, an amplified light of the first wavelength within the above-indicated wavelength band is generated as an output light, which is an amplified signal whose waveform is reversed with respect to that of the first input light.

The object indicated above is also achieved by a fourth optical control device corresponding to appended claim 4, which comprises (a) a semiconductor optical amplifying element operable to receive an input light of a first wavelength and intensity-modulate a light having a wavelength within a wavelength band which includes the wavelength of said input light and in which the semiconductor optical amplifying element has an amplification gain, such that the light having the wavelength within the above-indicated wavelength band is intensity-modulated in response to a variation in an intensity of said input light, (b) an optical inputting element operable to input to the semiconductor optical amplifying element a light of the first wavelength within the wavelength band in which the semiconductor optical amplifying element has the amplification gain, and (c) an optical filtering element operable to extract the light of said second wavelength from a light generated within the optical amplifying element, and output the extracted light of said second wavelength as an output light.

In the optical control device described above, the optical amplifying element is arranged to intensity-modulate a light of a wavelength within the wavelength band which includes the wavelength of the input light and in which the optical amplifying element has an amplification gain, such that the light of the wavelength within the above-indicated wavelength band is intensity-modulated in response to a variation in the intensity of the input light. The laser light of the second wavelength within the above-indicated wavelength band is extracted from the light output generated within the optical amplifying element. Accordingly, the amplified light of the second wavelength within the above-indicated wavelength band is obtained as an output light, which is an amplified signal whose waveform is reversed with respect to that of the first
Preferably, the optical amplifying element is an optical fiber doped with a rare-earth element. In this case, the coupled lights of the first and second wavelengths are easily input to one end of the fiber amplifier, and output from the other end of the fiber amplifier. The optical amplifying element is a glass fiber which is doped with a high concentration of erbium and which is excited by an excitation light having a wavelength permitting optical absorption at the normal energy level, for example, a wavelength of 0.98µm or 1.48µm. In this instance, the doping of the glass fiber with the high concentration of erbium reduces the lifetime of the spontaneous emission energy level, permitting a high-speed operation of the optical amplifying element.

Preferably, the semiconductor optical amplifying element is a semiconductor optical amplifying element operable to generate a light from its pn-junction portion, namely, its active layer (light-emitting layer) upon application of an electric current thereto. In this case, the optical amplifying element can be small-sized, and the switching speed of the element can be increased. The semiconductor optical amplifying element is desirably constituted by one of a semiconductor optical amplifying element of traveling-wave type (SOA) whose opposite end faces are processed to prevent optical reflection, a semiconductor optical amplifying element of Fabry-Perot type whose opposite end faces cooperate to define an optical resonator, a semiconductor optical amplifying element of distributed feedback type, a semiconductor optical amplifying element of distributed Bragg reflector type, a semiconductor optical amplifying element of external-resonance type, and a semiconductor optical amplifying element of surface-emitting type. The active layer providing the pn-junction portion is preferably constituted by one of a quantum well, a quantum slit, a quantum chamber and a strained superlattice.

Preferably, the optical filtering element is a grating filter constituted by an optical fiber or waveguide having a portion a refractive index of which is periodically changed in a longitudinal direction thereof. Where the optical control device per se is constituted by an optical fiber or waveguide, the above-indicated grating filter may consist of a portion or the entirety of the optical fiber or waveguide. In this case, the optical control device can be further small-sized.

The optical filtering element is preferably an optical filtering portion of the optical control device, which is provided by forming alternate projections and recessed periodically on a surface of a waveguide in the longitudinal direction. In this case, the waveguide need not be given a periodic change of its refractive index, so that the optical control device can be easily integrated as a monolithic IC.

Preferably, the optical filtering element is constituted by a multiplicity of layers which are superposed on each other and which having respective different refractive index values, to selectively permit transmission or reflection of light of a predetermined wavelength. This arrangement is effective particularly where the optical control device is operated with a surface-emitting semiconductor laser.

The optical inputting element is desirably constituted by one of an optical coupler, a directional coupler and an optical circulator. Where the optical circulator is used, the first input light can be input from an output portion of a semiconductor laser, which is commercially available and inexpensive.

### BRIEF DESCRIPTION OF DRAWINGS

Fig. 1 is block diagram illustrating an arrangement of an optical control device according to one embodiment of the present invention.
Fig. 2 is a view for explaining an energy level arrangement of an optical amplifying element in the embodiment of Fig. 1.
Fig. 3 is a view for explaining a spectrum of a spontaneous emission generated based on an input light, in the optical amplifying element in the embodiment of Fig. 1.
Fig. 4 is a view indicating a spectrum including a component having a wavelength λᵢ selected by an optical filtering element from the spontaneous emission generated in the optical amplifying element based on a second laser light L₂ having a second wavelength λ₂, in the optical control device of Fig. 1, wherein the spectrum where a first laser light L₁ having a first wavelength λ₁ is not coupled with the second laser light L₂ is indicated at (a), while the spectrum where the first laser light L₁ is coupled with the second laser light L₂.
Fig. 5 is a view showing intensity I₂ of the input light of the second wavelength λ₂ and intensity Iₒᵤₜ of an output light of the wavelength λ₁, in comparison with each other, with their signal waveforms taken along a common axis of time, in the optical control device of Fig. 1.
Fig. 6 is a view showing intensity of I₂ of the input light and intensity Iₒᵤₜ of the output light, in comparison with each other, with their signal waveforms taken along the common axis of time, where the first laser light L₁ of the wavelength λ₁ which is coupled with the intensity I₂ of the input light of the second wavelength λ₂ is modulated, in the optical control device of Fig. 1.
Fig. 7 is a view illustrating an arrangement of an optical control device according to another embodiment of this invention.
Fig. 8 is a view showing input and output waveforms in the embodiment of Fig. 7 taken along a common axis of time, in comparison with each other.
Fig. 9 is a view illustrating an arrangement of an optical control device according to a further embodiment of this invention.
Fig. 10 is a view showing input and output waveforms in the embodiment of Fig. 9 taken along a common axis of time, in comparison with each other.
Fig. 11 is a view indicating a relationship between an input light intensity and an output light intensity, for different control lights used as a parameter, in the embodiment of Fig. 9.
Fig. 12 is a view illustrating an arrangement of an optical control device according to a yet further embodiment of this invention.
Fig. 13 is a view illustrating an arrangement of an optical control device according to a still further embodiment of this invention.
Fig. 14 is a perspective view illustrating arrangements of semiconductor optical amplifying elements in the optical control device in the embodiment of Fig. 13, wherein the amplifying element in the form of a DFB semiconductor layer element is indicated at (a), while the amplifying element in the form of a DBR semiconductor laser element is indicated at (b).
Fig. 15 is a view showing a waveform of an input light and a waveform of an output light, to explain an operation of the optical control device in the embodiment of Fig. 13
Fig. 16 is a view illustrating an arrangement of an optical control device according to another embodiment of the present invention.
Fig. 17 is a view showing a waveform of an input light and a waveform of an output light, to explain an operation of the optical control device in the embodiment of Fig. 16.
Fig. 18 is a view illustrating an arrangement of an optical control device according to a further embodiment of this invention.
Fig. 19 is a view showing a waveform of an input light and a waveform of an output light, to explain an operation of the optical control device in the embodiment of Fig. 18.

### BEST MODE FOR CARRYING OUT THE INVENTION

Referring to the drawings, there will be described in detail an optical control device 10 according to one embodiment of this invention.

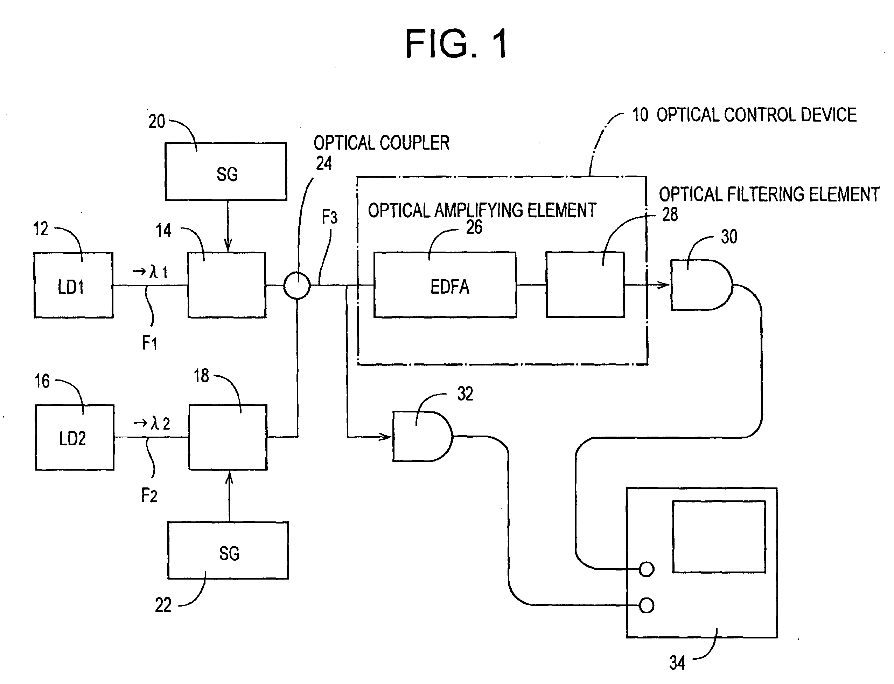

In Fig. 1, there is shown a first laser light source 12, which is arranged to generate a first laser light L₁ having a first wavelength λ₁, for example, 1534nm, such that the generated first laser light L₁ propagates through a first optical fiber F₁ to a first optical modulator 14. A second laser light source 16 is arranged to generate a second laser light L₂ having a second wavelength λ₂, for example, 1555nm, such that the generated second laser light L₂ propagates through a second optical fiber F₂ to a second optical modulator 18. For instance, the first laser light source 12 and the second laser light source 16 are variable-wavelength semiconductor lasers. The first optical modulator 14 and the second optical modulator 18 are arranged to effect pulse modulation of the laser lights passing therethrough, according to electric signals generated from respective signal generators 20, 22, so that the laser lights are modulated into pulse signals having respective frequencies of the electric signals. An optical coupler 24 connects the above-indicated first optical fiber F₁ and second optical fiber F₂ to a third optical fiber F₃, and couples the first and second laser lights L₁, L₂ which have propagated through the respective first and second optical fibers F₁, F₂. The coupled laser lights L₁, L₂ are input to an optical amplifying element 26 through the third optical fiber F₃. An optical filtering element 28 is connected to the optical amplifying element 26, and is arranged to extract a light of the first wavelength λ₁ from the light output from the optical amplifying element 26, and output the extracted light as an output light. Those optical amplifying element 26 and optical filtering element 28 correspond to the optical control device 10 which converts the signal of the second laser light L₂ into a signal of the wavelength λ₁, and directly amplifies the latter signal into the output light. In Fig. 1, there are also shown a pair of photodetectors 30, 32 arranged to monitor the output light that has passed through the optical filtering element 28, and the coupled first and second laser lights L₁, L₂, and an oscilloscope 34 for observing optical signals as detected by the photodetectors 30, 32.

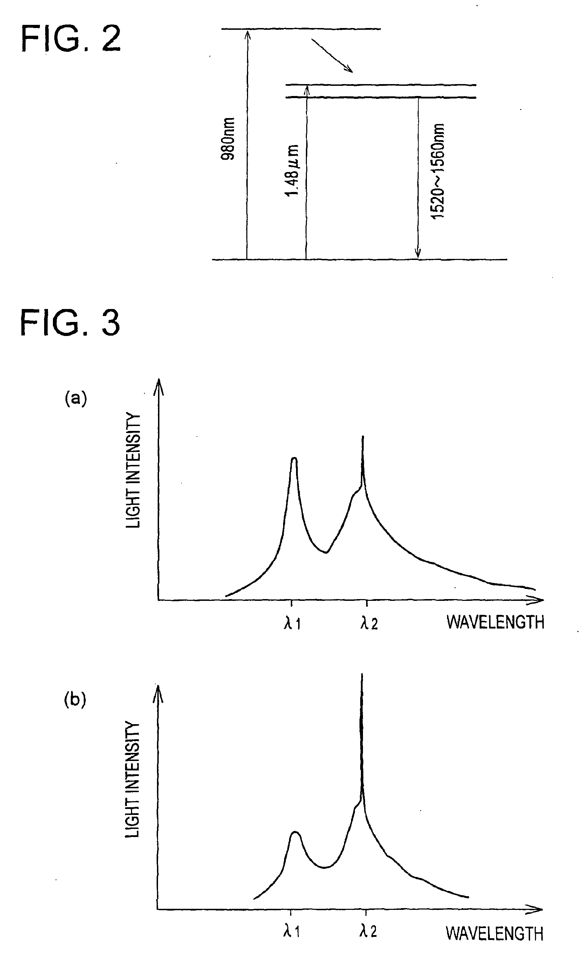

For example, the optical amplifying element 26 described above is a light-transmitting medium such as quartz or fluoride glass, which is doped with a rare-earth element such as erbium, so as to establish three- or four-energy-level system within the light-transmitting medium, as indicated in Fig. 2, thereby forming a so-called "laser system". The optical amplifying element 26 in the present embodiment is constituted by a glass fiber which has a length of about 20m and which is doped with erbium and aluminum and includes erbium ion Er³⁺ of a comparatively high concentration of about 1700ppm and aluminum ion Al³⁺ of about 10000ppm. In this respect, the optical amplifying element 26 is also referred to as an erbium-doped fiber amplifier (EDFA). This optical amplifying element 26, when it is placed in its excited state, is capable of optically amplifying the light of the above-indicated first wavelength λ₁ or second wavelength λ₂. When a laser light of a wavelength of 1.48µm, for example, is propagated in the longitudinal direction of the optical amplifying element 26, the erbium element is kept in its excited state, so that upon incidence of either of the above-indicated wavelengths, for instance, the second wavelength λ₂, there is generated a broad-band spontaneous emission light (ASE) having the second wavelength λ₂ as its center wavelength, as shown at (a) in Fig. 3. Further, increasing the intensity of the laser light of the second wavelength λ₂ causes a phenomenon that the intensity at the center wavelength is increased, while on the other hand the intensity of the light in the neighboring wavelength band is reduced, as shown at (b) in Fig. 3. The above-indicated spontaneous emission light, that is, the surrounding light has a wavelength band in which the optical amplifying element 26 has an amplification gain.

For example, the optical filtering element 28 described above is a fiber grating filter formed of a glass filter which is locally irradiated with a ultraviolet radiation and the refractive index of which is locally periodically changed in its longitudinal direction. The optical filtering element 28 extracts and passes the light having the first wavelength λ₁ as the center wavelength and a half-width value of 1nm. For instance, the optical filtering element 28 is provides at the terminal portion of the glass filter of the optical amplifying element 26 described above.

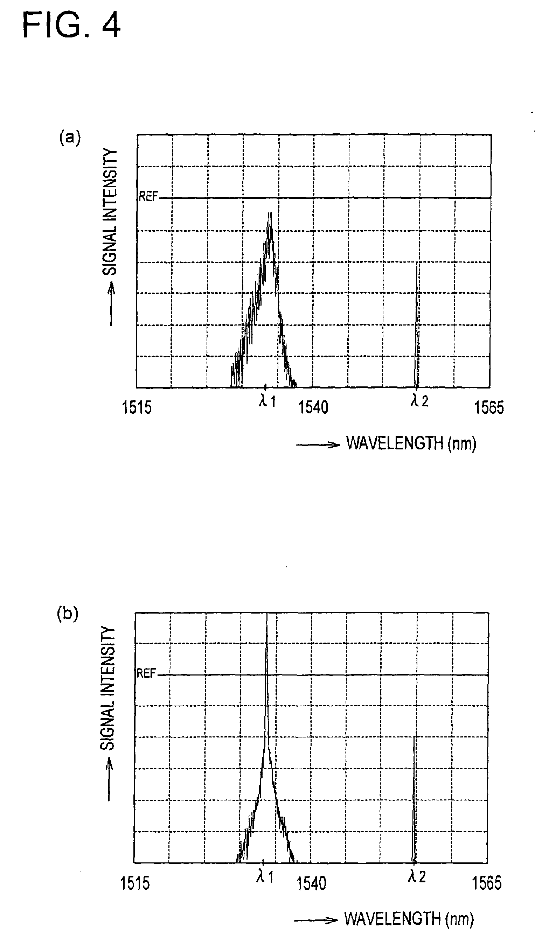

When only the modulated second laser light L₂ is input to the optical amplifying element 26 in the optical control device 10 arranged as described above, the output light extracted by the optical filtering element 28 has a spectrum as shown at (a) in Fig. 4. When the second laser light L₂ coupled with the non-modulated first laser light L₁ is input to the optical amplifying element 26, the output light extracted by the optical filtering element 28 has a spectrum as shown at (b) in Fig. 4. The output lights shown at (a) and (b) in Fig. 4 are the wavelength L₁ components which have been extracted by the optical filtering element 28 from the spontaneous emission light generated within the optical amplifying element 26 upon incidence of the second laser light L₂ of the second wavelength λ₂. In the case shown at (b) in Fig. 4 wherein the non-modulated first laser light L₁ is coupled with the second laser light L₂, the peak intensity value of the output light is considerably increased owing to the laser induced signal enhancement effect described above. The non-modulated light is interpreted to mean a continuous wave having a constant intensity.

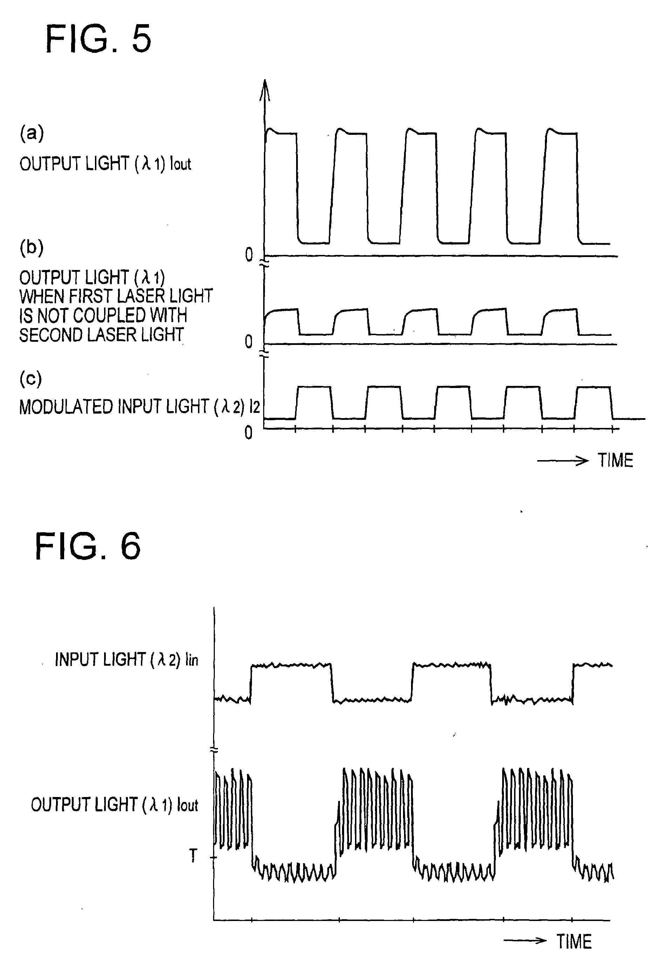

In the optical control device 10 of Fig. 1, therefore, the second laser light L₂ is modulated at 1kHz by the second modulator 18, and the thus modulated second laser light L₂ (I₂) coupled with the non-modulated first laser light L₁ (I₁) is input to the optical amplifying element 26, so that the 1kHz input signal (second laser signal L₂) indicated at (c) in Fig. 5 is amplified into an output light (Iₒᵤₜ) indicated at (a) in Fig. 5. At (b) in Fig. 5, there is shown an output light when the non-modulated first laser light L₁ is not coupled with the modulated second laser light L₂ input to the optical amplifying element 26. The intensity Iₒᵤₜ of the above-indicated output light measured by an optical power meter was 273mW when the intensity I₁ was 0µW, and 1350µW when the intensity I₁ was 5mW. It is apparent from this fact that the intensity lout of the output light is considerably amplified by coupling the first laser light L₁ with the second laser light L₂. It is also noted that the waveform of the output light is reversed with respect to that of the input light, and that the percentage (%) of modulation of the input light is held constant. The modulation percentage is represented by 100 x (Iₘₐₓ - Iₘᵢₙ)/(Iₘₐₓ + Iₘᵢₙ), where "Iₘₐₓ" represents a maximum value of the optical signal while "Iₘᵢₙ" represents a minimum value of the optical signal.

In the optical device 10 including the above-described optical amplifying element 26 and optical filtering element 28, a second input light in the form of the second laser light L₂ having the second wavelength λ₂ is input to the optical amplifying element 26, and a first input light having the first wavelength λ₁ which is different from the second wavelength λ₂ is input to the optical amplifying element 26 through the optical coupler 24 functioning as an optical input device or element. The first wavelength λ₁ is selected within a wavelength band of the surrounding light (spontaneous emission light) with respect to the second wavelength λ₂, that is, within the neighboring wavelength band of the second input light. Thus, the second laser light L₂ and the first laser light L₁ are coupled together, and the light output from the optical amplifying element 26 is filtered by the optical filtering element 28, to output an output light having the first wavelength λ₁. This output light is amplified in response to a signal variation of the second laser light L₂ of the second wavelength λ₂, so that the signal variation of the second laser light L₂ is amplified. Namely, the output light, which has a phase reversed with respect to the input signal in the form of the modulated second laser light L₂, has the signal intensity Iₒᵤₜ which is considerably amplified with respect to the signal intensity I₂ of the second laser light L₂.

The optical amplifying element 26 used in the present embodiment is constituted by a glass fiber doped with erbium, for example, and is arranged to receive at one end of the glass fiber the first laser light L₁ and second laser light L₂ which have been coupled together, and generates the output light at the other end of the glass filter, which can be easily filtered by the optical filtering element 28. Further, the glass filter of the optical amplifying element 26 which is doped with a high concentration of erbium is excited by an incident excitation light having a wavelength permitting optical absorption at the normal energy level, for example, a wavelength of 0.98µm or 1.48µm. The doping of the glass fiber with the high concentration of erbium reduces the lifetime of the spontaneous emission energy level, permitting a high-speed operation of the optical amplifying element 26.

On the other hand, the optical filtering element 28 used in the present embodiment also functions as an optical output element or device, and is a grating filter constituted by a glass filter the refractive index of which is locally periodically changed in its longitudinal direction. The grating filter of the optical filtering element 28 may be constituted by a portion of the glass filter of the optical amplifying element 26, or by a glass filter connected to the glass filter of the element 26, so that the optical amplifying device 10 functioning as an optical function element can be small-sized.

Other embodiments of the present invention will be described. In the following description, the same reference signs as used in the above embodiment will be used to identify the functionally corresponding elements, which will not be described redundantly.

Referring to Fig. 6, there are illustrated waveforms where an input light is modulated at 20kHz by the first modulator 14 in the device of Fig. 1. Fig. 6 shows at (a) an input light (second laser light L₂) subjected to the 1 kHz modulation, and shows at (b) an output light (Iₒᵤₜ) obtained as a result of coupling of the input light in the form of the second laser light L₂ and the input light (first laser light L₁) subjected to the 20 kHz modulation. This embodiment is a case where the signal frequency is relatively low. Namely, it is confirmed that sufficient amplification of the input light is where the modulation frequency of the first laser light L1 is on the order of giga Hz. It is also noted that switching of the output light is possible, by setting a suitable threshold value T as indicated in Fig. 6.

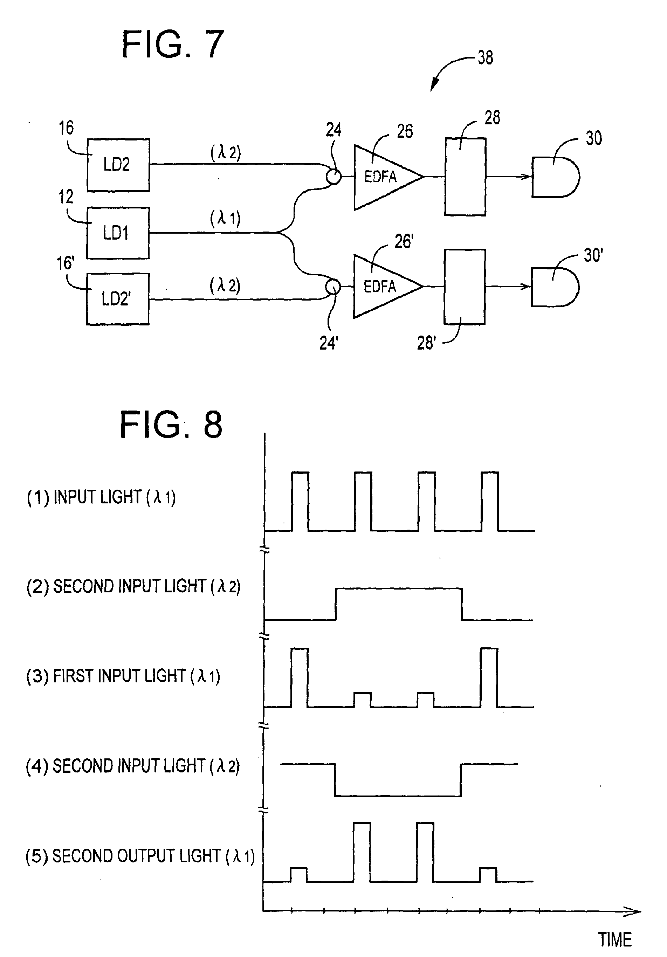

Fig. 7 shows an optical control device 38 which uses two optical control devices identical with the optical control device 10 used in the embodiment of Fig. 1, to provide a pair of optical switches. In the device of Fig. 7, a pair of optical amplifying elements 26, 26' are adapted to receive a modulated signal of the wavelength λ₁ generated by the laser light source 12 as indicated at (1) in Fig. 8, and respective two modulated signals of the wavelength λ₂ and having mutually reversed phases generated by the respective laser light sources 16, 16' as indicated at (2) and (4) in Fig. 8. The modulated signal of the wavelength λ₁ is coupled with the modulated signals of the wavelength λ₂, by the respective optical couplers 24, 24'. A pair of optical filtering elements 28, 28' are adapted to receive the coupled modulated signals and extract the first wavelength λ₁, thereby outputting a pair of output lights as indicated at (3) and (5) in Fig. 8. Thus, the modulated first input laser light having the wavelength λ₁ is switched into the two output lights, by the modulated second input laser light having the wavelength λ₂.

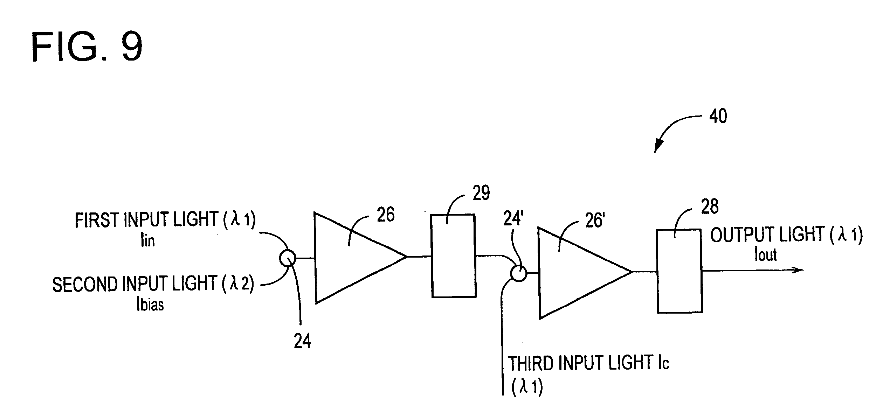

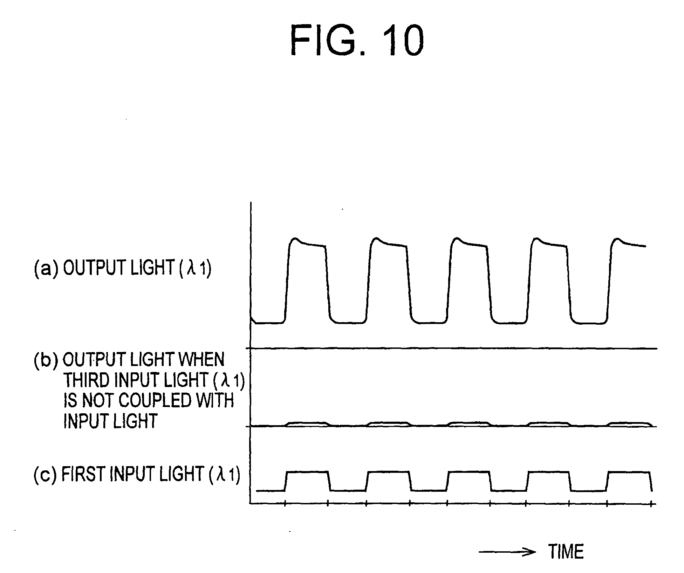

Fig. 9 shows an optical control device 40 wherein the first optical coupler 24 is adapted to couple together a first laser light L₁ of the wavelength λ₁ (first input light: Iᵢₙ) and a second laser light L₂ of the wavelength λ₂ (second input light or bias light I_{bias}), which are input to the optical amplifying element 26, and a first optical filtering element 29 is adapted to extract the wavelength λ₂ of the output of the optical amplifying element 26. Further, the second optical coupler 24' is arranged to couple the output light of the first filtering element 29 and a third laser light L₃ of the wavelength λ₁ in the form of a non-modulated, continuous wave signal (third input light or control light I_{c}). The output of the second optical coupler 24' is input to the second optical amplifying element 26', and a second optical filtering element 28 is adapted to extract the wavelength λ₁ of the output of the second optical amplifying element 26', for thereby outputting an amplified output signal Iₒᵤₜ as indicated at (a) in Fig. 10. Fig. 10 shows at (b) an optical output signal where the third laser light L₃ is not coupled with the output of the wavelength λ₂ of the optical filtering element 29, when the output of the optical filtering element 29 is input to the second optical amplifying element26'. Fig. 10 shows at (c) a signal waveform of the above-indicated first laser light L₁.

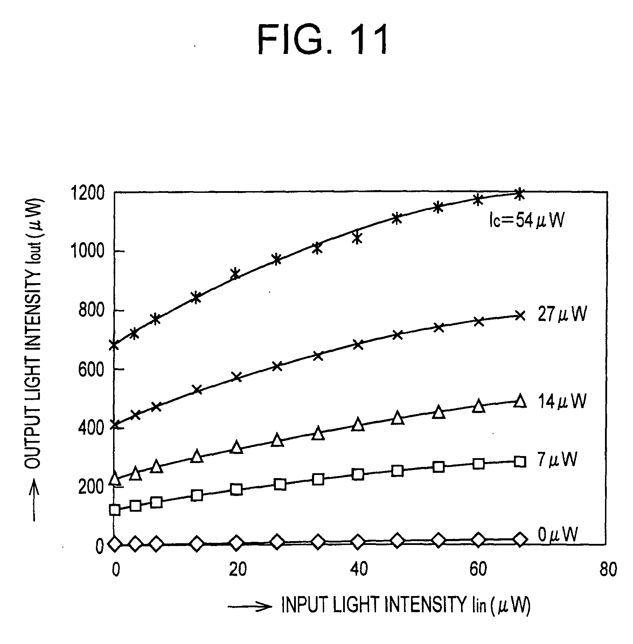

Fig. 11 indicates an input-output characteristic of the optical control device 40 of Fig. 4, namely, a relationship between the intensity Iᵢₙ of the first laser light L₁ (first input light) and the intensity Iₒᵤₜ of the output light, for different intensity values of the third laser light L₃ (third input light or control light I_{c}). It will be understood from Fig. 11 that while the intensity of the output light is almost zero when the intensity of the control light I_{c} is zero, the intensity of the output light is abruptly increased by injecting the control light I_{c} into the first input light. Described in detail, the first laser light L₁ of the first wavelength λ₁ can be amplified into the output light of the first wavelength λ₁, or can be switched into the output light of the first wavelength λ₁ by using the third input light. The intensity of the output light can be controlled by the control light I_{c} of the first wavelength λ₁, as in a triode transistor.

In the present embodiment, the output light Iₒᵤₜ has not only a wavelength equal to the first wavelength λ₁ of the first laser light L₁ (first input light: Iᵢₙ), but also an intensity variation which is identical in phase with the first laser light L₁ of the first wavelength λ₁ and amplified with respect to that of the first laser light L₁. Thus, the present arrangement is advantageous in that the input and output lights have the same wavelength, in a multi-stage optical circuit.

Although the optical amplifying element 26 used in the embodiment of Fig. 1 is constituted by the glass fiber doped with erbium, the glass fiber may be doped with praseodymium. In this case, a first laser light having a wavelength λ₁ of 1322nm and a second laser light having a wavelength λ₂ of 1330nm are preferably used. Further, the optical amplifying element 26 may be constituted by semiconductor optical amplifying element such as an InGaAsP/InP semiconductor, as described below. In this case wherein a first laser light having a wavelength λ₁ of 1550nm and a second laser light having a wavelength λ₂ of 1530nm are preferably used, the optical control device can be small-sized and the optical switching speed can be increased.

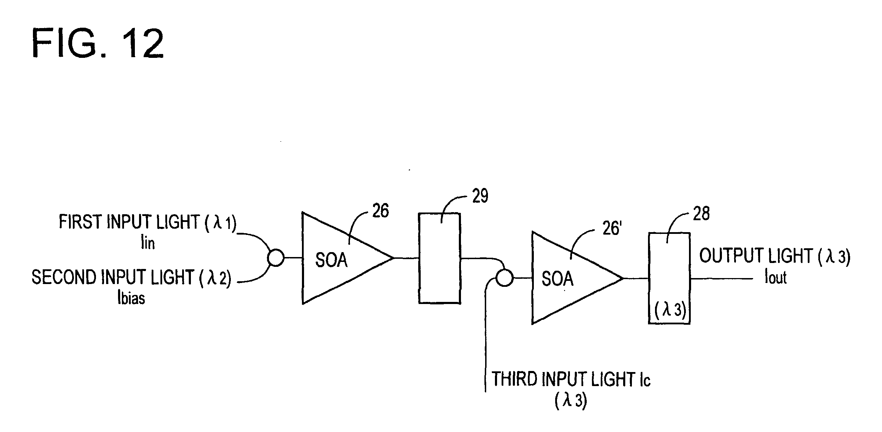

Fig. 12 shows a specific example of the optical control device 40 of Fig. 9, wherein a semiconductor optical amplifying element (SOA: semiconductor optical amplifier) of traveling-wave type whose reflectance at its opposite ends is reduced to 0.1-1% or lower is used for each of the optical amplifying elements 26, 26'. In this example, each of the semiconductor amplifying elements 26, 26' exhibited a gain of about 20dB upon application of an electric current of 250mA to the element. Where the third input light having a wavelength λ₃ different from the wavelength λ₁ is used, and the optical filtering portion 28 is arranged to extract the wavelength λ₃, the present optical control device can be utilized as a wavelength converting element operable to extract the wavelength λ₃, as well as a signal switching and amplifying device. The semiconductor optical amplifying element 26 of traveling-wave type is arranged to receive an input light Iᵢₙ in the form of a laser light having the first wavelength (λ₁) and an input light I_{bias} in the form of a bias light having the wavelength (λ₂), which have been coupled together. The first wavelength (λ₁) lies within the neighboring wavelength band in which the optical amplifying element 26 has an amplification gain (not lower than 1) determined by a band gap of a material of an active layer of the element 26. As a result, the optical filtering portion 29 generates an output light of the wavelength λ₂ whose waveform is reversed with respect to that of the input light Iᵢₙ of the first wavelength λ₁. Similarly, the optical amplifying element 26' is arranged to receive the output light of the element 26 having the wavelength λ₂ within the neighboring wavelength band of the element 26', and the third input light of the third wavelength λ₃. As a result, the optical control device generates an output light lout of the wavelength λ₃ which is reversed and amplified with respect to the output light of the element 26.

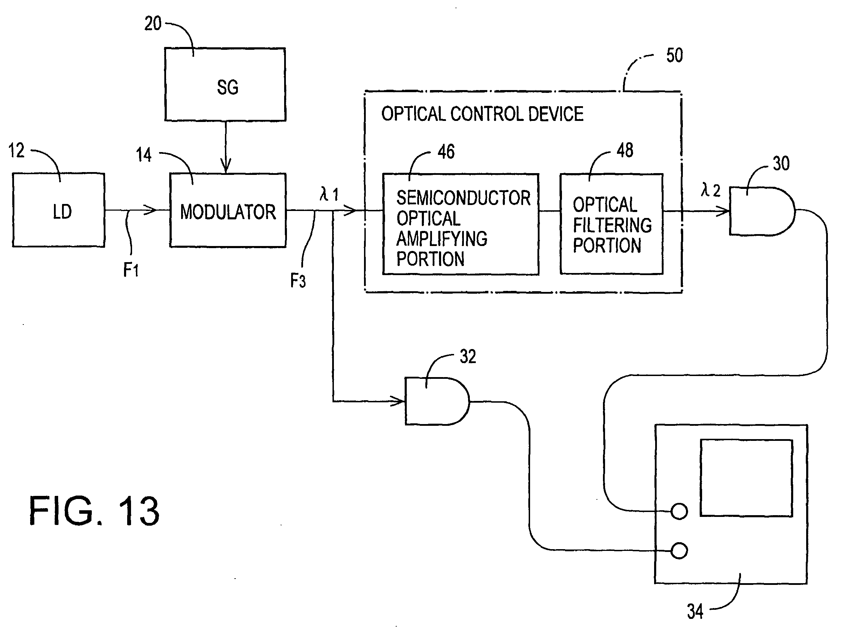

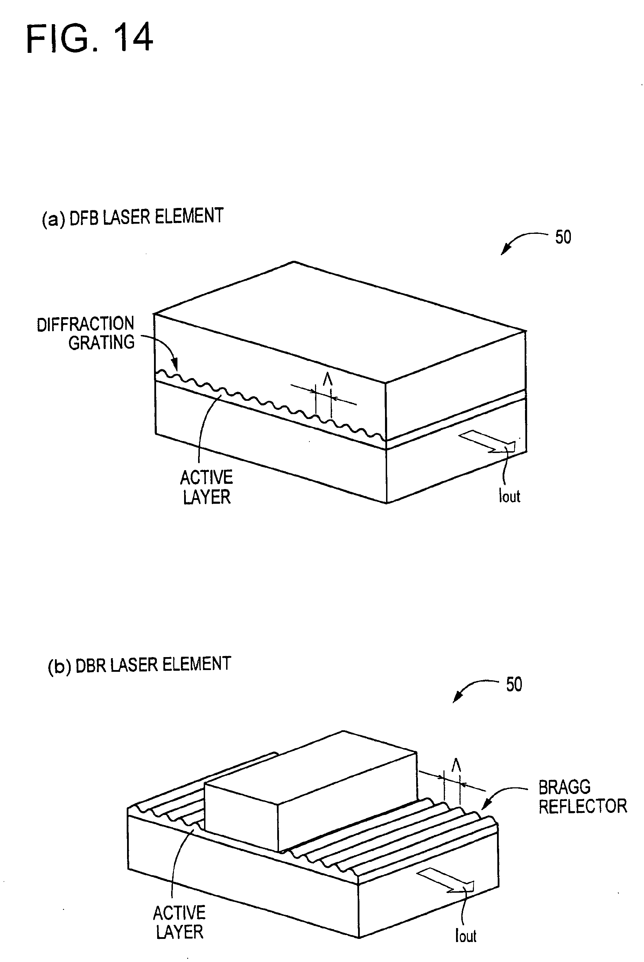

Fig. 13 shows an optical control device 50 provided with a semiconductor optical amplifying portion 46 and an optical filtering portion 48. This optical control device 50 may include a semiconductor laser of Fabry-Perot type, external-resonance type or surface-emitting type, or a semiconductor optical amplifying element of single longitudinal-mode type, for example. When an active layer (light-emitting layer) of this semiconductor optical amplifying element 46 is excited upon application of an electric current thereto, a laser light (Iₒᵤₜ) is output from the active layer. The element 46 has a function of feeding back a portion of the output light, and is preferably constituted by a semiconductor laser element of the external-resonance type, or a semiconductor optical amplifying element of feedback type such as a semiconductor laser element of distributed feedback type (DFB) shown at (a) in Fig. 14, a semiconductor laser element of distributed Bragg reflector type (DBR) shown at (b) in Fig. 14. The semiconductor laser element of the distributed feedback type (DFB) or the distributed Bragg reflector type (DBR) has a diffraction grating or Bragg reflector provided by minute alternate projections and recesses which are formed periodically by a laser interference exposure method, on a bonding interface between the active layer serving as a waveguide and a layer adjacent to the active layer, namely, on a surface of the waveguide. This semiconductor laser element has a function of selecting the oscillation wavelength, based on an optical reflecting function of the diffraction grating or Bragg reflector. That is, the oscillation (amplification) in the active layer takes place in a single longitudinal mode at a wavelength λ at which the diffraction grating or Bragg reflector has a maximum value of reflectance, namely, at a wavelength λ (= 2nΛ/1, where "n" represents the refractive index of the mode, and "1" is the order of diffraction) which is determined by a period Λ of the minute projections and recesses. Accordingly, the semiconductor optical amplifying element which is the semiconductor laser element of the distributed feedback type (DFB) or distributed Bragg reflector type (DBR) is capable of generating a light having a wavelength band in which the amplification gain determined by the material of the active layer is larger than 1, so that the input light is amplified within that wavelength band. Within this wavelength band, the oscillation takes place at a single wavelength λ determined by the above-indicated periodic minute alternate projections and recesses. Thus, the active layer having the minute projections and recesses at the interface with the waveguide functions as the above-indicated semiconductor optical amplifying portion 46 and the optical filtering portion 48. The semiconductor laser element of the distributed feedback type (DFB) and the semiconductor laser element of the distributed Bragg reflector type (DBR) do not require reflecting mirror at their end faces, those types of semiconductor laser elements are suitable for monolithic integration of the optical control device.

When a first laser light L₁ of a wavelength λ of 1550nm, for example, which is generated by the laser light source 12 and modulated by the modulator 14 is input to the optical control device 50 of Fig. 13 (upon the DFB or DBR semiconductor laser element), this modulated first laser light L₁ effects modulation of a light within the neighboring wavelength band within the semiconductor optical amplifying portion 50, that is, effects a variation in the intensity of that light which is reversed in phase with respect to the input light. This phenomenon is referred to as "cross-gain modulation". In the above-indicated semiconductor laser amplifier used in the optical control device 50, the oscillation takes place in the single longitudinal mode, at the wavelength determined by the period Λ of the minute projections and recesses. This semiconductor laser amplifier generates the output light Iₒᵤₜ having a second wavelength λ₂ (1540nm) which is the neighboring wavelength near the wavelength λ₁ (1550nm) of the above-indicated input light Iᵢₙ and which is determined by the period Λ. This neighboring wavelength is determined by the energy level of the material of the active layer, and lies within a wavelength band in which the semiconductor laser amplifier has an amplification gain (larger than 1). The wavelength λ₁ of the input light Iᵢₙ and the wavelength λ₂ of the output light Iₒᵤₜ may also be selected as needed, within the wavelength band in which the semiconductor (DFB) laser element has an amplification gain.

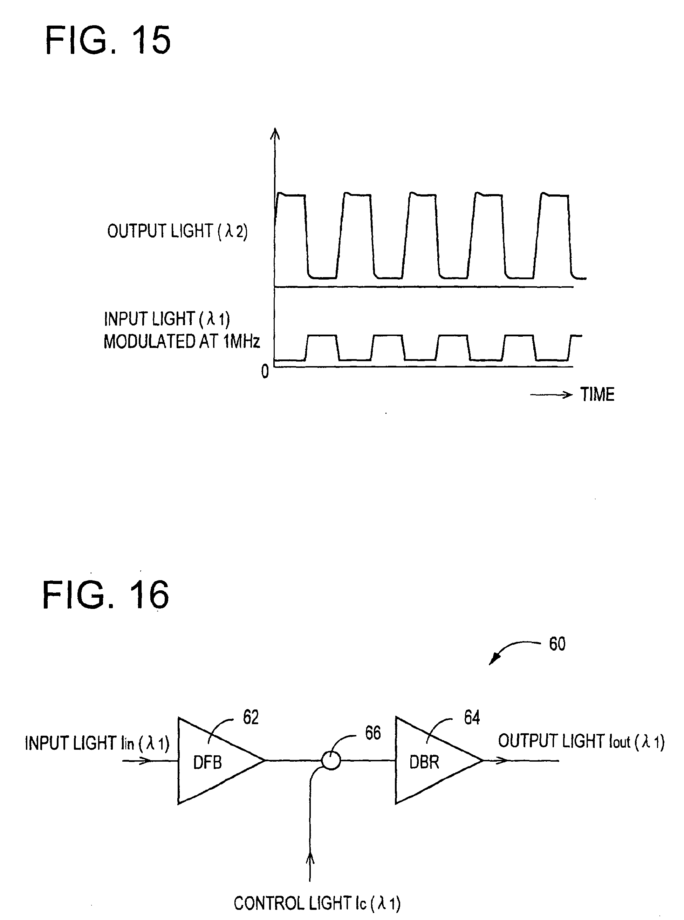

Fig. 15 shows the waveform of the input light Iᵢₙ of the wavelength modulated at 1MHz and the waveform of the output Iₒᵤₜ, when an electric current of 30mA is applied to the DFB laser element of the active layer having a multiplex quantum well structure of InGaAsP, in the semiconductor laser amplifier in the optical control device 50. The modulation factor of the input light Iᵢₙ is almost 100%, and that of the output light Iₒᵤₜ is also almost 100%. It is generally confirmed the factor of the cross-gain modulation of the output light is generally low in a semiconductor optical amplifying element of traveling-wave type wherein the end face reflectance is set as low as 0.1-1%. In the present embodiment, however, the output light Iₒᵤₜ has a sufficiently high modulation factor. In this respect, the DFB laser element used in the optical control device 50 can be said to have not only an optical filtering function of extracting the second wavelength λ₂ of the output light within the neighboring wavelength band of the input light Iᵢₙ, but also an optical amplifying function of increasing the modulation factor of the output light by feeding back the light, while serving as a resonator.

While the embodiments of Figs. 1 and 9 use as the input lights the two laser lights (one of which is the bias light) having the respective wavelengths, the optical control device 50 using the DFB semiconductor laser element according to the present embodiment is advantageous in that the optical control device 50 requires only one input light Iᵢₙ, and eliminates the external bias light, since the light generated within the semiconductor optical amplifying portion 46 is output as the output light (bias light) lₒᵤₜ.

Further, an optical circulator may be provided such that the optical circulator receives the input light Iᵢₙ from the output side of the above-indicated DFB semiconductor laser element, so that the output light Iₒᵤₜ is obtained through the optical circulator. This arrangement permits the optical control device 50 to be constituted by an ordinary semiconductor laser element which is optically simple and provided with only an optical output portion and which is commercially available.

In the DFB semiconductor laser element or DBR semiconductor laser element of the optical control device 50, the active layer has a quantum slit or a quantum chamber (quantum dot) as well as a single or multiplex quantum well. Further, the DFB or DBR semiconductor laser element may be provided with a strained superlattice which is strained by a lattice constant difference, so that the output light does not have polarization dependency.

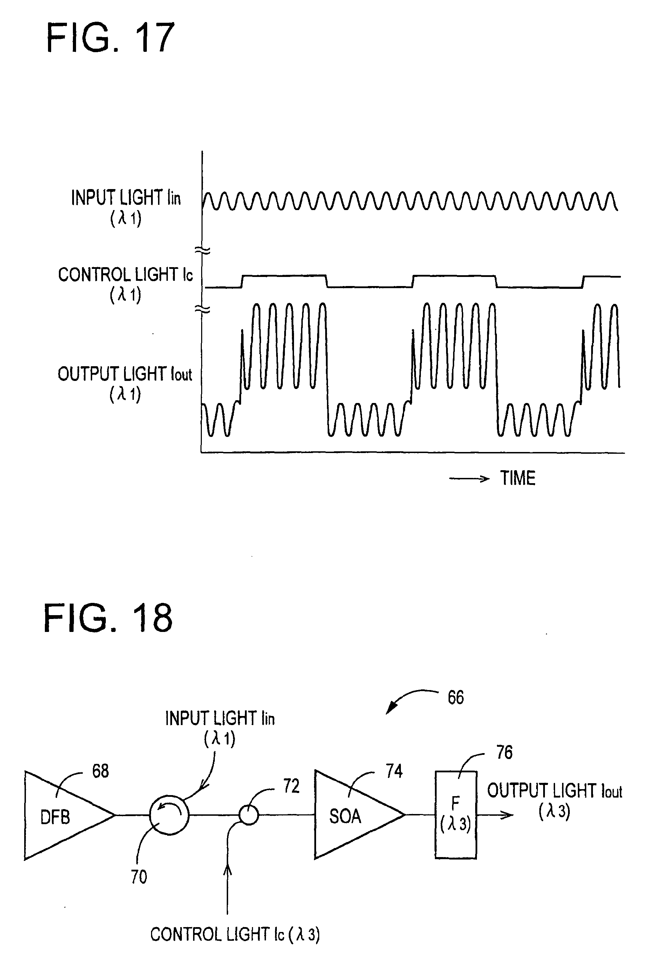

Referring to Fig. 16, there is shown a further embodiment of this invention, in the form of an optical control device 60 which has three terminals and which includes a first semiconductor amplifying element 62 constituted by a DFB semiconductor laser element, and a second semiconductor amplifying element 64 constituted by a DBR semiconductor laser element. This three-terminal optical control device 60 is preferably used as a part of an optical IC of monolithic structure wherein a multiplicity of optical control elements or optical control devices are integrated. In the optical control device 60, the intensity-modulated input light Iᵢₙ of the wavelength λ₁ is input to the first semiconductor amplifying element 62 which is arranged to effect oscillation at the wavelength λ₂, for example, and a directional coupling waveguide 66 is provided to couple together the laser light of the wavelength λ₂ output from the first semiconductor amplifying element 62 and an intensity-modulated control light I_{c} of the wavelength λ₁, so that the thus coupled laser light of the wavelength λ₂ and the control light I_{c} are input to the second semiconductor amplifying element 64. Since the second semiconductor amplifying element 64 is arranged to effect oscillation at the wavelength λ₁, the output light Iout of the wavelength λ₁ is obtained from the element 64. The above-indicated wavelength λ₁ and wavelength λ₂ lies within the neighboring wavelength bands of the first and second semiconductor amplifying elements 62, 64. In the present embodiment, the optical switching is suitably performed by the first semiconductor amplifying element 62 in the form of the DBR semiconductor laser element, while the signal amplification is suitably effected by the second semiconductor amplifying element 64 in the form of the DBR semiconductor laser element. Fig. 17 shows the waveform of the input light Iᵢₙ, control light I_{c} and output light Iₒᵤₜ in the present three-terminal optical control device 60. As is apparent from Fig. 17, the waveform of the output light Iₒᵤₜ is considerably amplified with respect to the input light Iᵢₙ, and is controlled by the intensity-modulated control light I_{c} of the wavelength λ₁.

A three-terminal optical control device 66 shown in Fig. 18 includes: a first semiconductor optical amplifying element 68 in the form of a DFB semiconductor laser element or a DBR semiconductor laser element, which has a light selecting function in a single-wavelength oscillation mode at the wavelength λ₂, for example; an optical circulator 70 for applying an input light Iᵢₙ to an optical output portion of the first semiconductor optical amplifying element 68, for modulating the output of the element 68; a second semiconductor optical amplifying element 74 in the form of a semiconductor optical amplifying element (SOA) of traveling-wave type whose reflectance at its opposite end faces is reduced to 0.1-1% or lower and which is capable of optical amplification at a plurality of wavelengths; a directional optical coupler 72 for coupling together the above-indicated input light Iᵢₙ and the control light I_{c}, so that the thus coupled input light Iᵢₙ and control light I_{c} are input to the second semiconductor optical amplifying element 74; and an optical filter 76 for extracting one wavelength, for instance, the wavelength λ₃ from the output wavelength of the element 74. In the present embodiment, the intensity-modulated input light Iᵢₙ of the wavelength is input to the first semiconductor optical amplifying element 68 which is arranged to effect oscillation at the wavelength λ₂, for example. The laser light of the wavelength λ₂ output from the first semiconductor optical amplifying element 68 and the intensity-modulated control light I_{c} of the wavelength λ₃ are coupled together by the directional optical coupler 72, and the thus coupled laser light and control light I_{c} are input to the second semiconductor element 74. The optical filter 76 extracts the output light Iₒᵤₜ of the third wavelength λ₃ from the output wavelength of the second semiconductor element 74. In the present embodiment, the input light Iin for modulating the output of the first semiconductor amplifying element 68 is applied from the optical circulator 70 to the optical output portion of the element 68, so that a semiconductor laser element commercially available can be used as the element 68. In addition, the control light I_{c} has the third wavelength λ₃, and the optical filter 76 is arranged to extract the third wavelength λ₃, so that the present optical control device can be utilized as a wavelength converting element operable to generate the output light lout having the wavelength λ₃. In the present embodiment wherein the second semiconductor amplifying element 74 is constituted by the semiconductor amplifying element (SOA) of traveling-wave type arranged to effect signal amplification within the wavelength band of the surrounding light, the wavelength of the output light Iₒᵤₜ can be selected as desired within the wavelength band of the surrounding light, by suitably determining the wavelength λ₃ of the control light I_{c} and the wavelength of the output light extracted by the optical filter 76. Accordingly, the wavelength λ₃ of the control light I_{c} and the wavelength extracted by the optical filter 76 can be set to be λ₁.

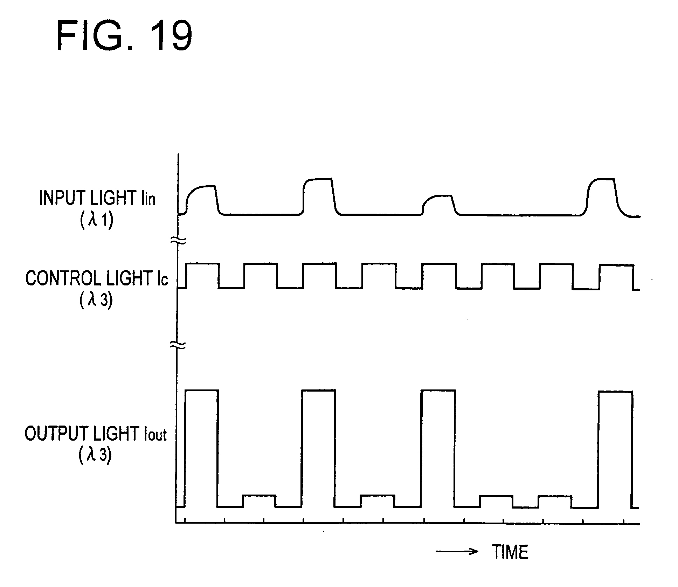

Fig. 19 shows the waveforms of the input light Iᵢₙ, control light I_{c} and output light Iₒᵤₜ in the three-terminal optical control device 66 described above. The input light Iᵢₙ, which has the strained waveform, is modulated by the control light I_{c}, and the modulated input light Iᵢₙ is reshaped into a rectangular form and amplified into the output light Iₒᵤₜ. Namely, the optical control device 66 has important 3R functions, that is, a waveform reshaping function, a retiming function to accurately determine signal timing, and a regenerating function to generate an output light having a high intensity (a highly amplified intensity), as discussed below.

In a regenerative repeater for optical signals in the conventional optical communication, the optical signals are generally detected and converted into electric signals, which are subjected to a waveform reshaping operation so that clock signals are extracted from the reshaped electric signals, and a retiming operation to determine the on-off timing is performed according to the clock signals. The light source is then modulated according to on-off timing signals representative of the determined on-off timing, for performing a regenerating operation to regenerate an optical output signal having a high intensity. Those reshaping, retiming and regenerating operations are referred to as the above-indicated 3R functions. However, the electrical processing in the conventional regenerative repeater for the optical signals is limited in the processing speed. Since the maximum electrical processing speed is 10-40GHz, the conventional regenerative repeater for the optical signals is not capable of achieving optical communication at a speed higher than a time-multiplexing bit rate. Further, the conversion from the optical signals into the electric signals, and the regeneration of the optical signals from the electric signals require a relatively large number of required components of the regenerative repeater, resulting in an increased cost of manufacture of the regenerative repeater. On the other hand, the use of an optical amplifying element constituted by an optical fiber doped with erbium permits amplification of optical signals per se and compensation for a loss due to attenuation during the transmission of the optical signals. However, the use of the optical amplifying element described above still suffer from problems such as analog waveform straining and pulse jitter, which are caused due to the retiming operation according to the clock signals and incapability to perform the waveform reshaping operation.

While the several embodiments of this invention have been described above by reference to the drawings, it is to be understood that the present invention is otherwise embodied.

In the illustrated embodiments, one optical amplifying element 26 and one optical filtering element 28, for example, cooperate to constitute one optical function element. Described more specifically, each of the embodiments of Fig. 1 and Fig. 13 uses only one optical function element, while each of the embodiments of Fig. 9, Fig. 16 and Fig. 18 use two optical function elements connected in series with each other. However, three or more optical function elements may be connected in series or parallel with each other.

Where the oscillation wavelength (amplifying wavelength) is 1500nm, a semiconductor optical amplifying element of InGaAsP/InP is preferably used for the optical amplifying elements 26, 26', 46, 62, 64, 68, 74 in the illustrated embodiments. However, the material of the active layer of those optical amplifying elements may be selected from any other semiconductors of multiple-elements mixed crystals of Groups III-V, in particular, such as InGaP, InGaAs, AlGaAs, InGaAlN, InGaNAs, InAsP, AlGaInAs, InGaN, InGaAsSb, InAsPSb, AlGaAsSb, PbSnTe, PbTeS, PbTeSe, PbSSe, and ZnO. By suitably determining the proportion (mixing ratios) of the elements of the selected semiconductor, the wavelength of the light to be amplified can be changed as desired.

It is to be understood that the embodiments of the present invention have been described above for illustrative purpose only, and that various changes may be made in the present invention, without departing from the principle of the invention.

## Claims

1. An optical control method **characterized by** comprising:
a step of inputting a first input light of a first wavelength to a first optical amplifying element, so that a light having a wavelength within a wavelength band which includes the wavelength of said first input light and in which said first optical amplifying element has an amplification gain is intensity-modulated in response to a variation in an intensity of said first input light;
a step of inputting to said first optical amplifying element a laser light of a second wavelength within said wavelength band in which said first optical amplifying element has the amplification gain;
a step of extracting the light of the second wavelength from a light generated from said first optical amplifying element, and inputting the extracted light to a second optical amplifying element;
a step of inputting to said second optical amplifying element a laser light of said first wavelength or a laser light having a third wavelength within a wavelength band which includes said first wavelength and in which said second optical amplifying element has an amplification gain: and
a step of extracting the light of said first or third wavelength from a light output from said second optical amplifying element, and outputting said light of said first or third wavelength.

2. An optical control method **characterized by** comprising:
a step of inputting a first input light of a first wavelength to a first semiconductor optical amplifying element, so that a light generated within said first semiconductor optical amplifying element is intensity-modulated in response to a variation in an intensity of said first input light;
extracting the light of a second wavelength from a light which is generated within said first semiconductor optical amplifying element and which has the second wavelength within a wavelength band in which said first semiconductor optical amplifying element has an amplification gain, and outputting the extracted light to a second semiconductor optical amplifying element;
a step of inputting to said second semiconductor optical amplifying element a laser light of said first wavelength or a laser light of a third wavelength within a wavelength band which includes said first wavelength and in which said second semiconductor optical amplifying element has an amplification gain; and
a step of extracting the light of said first or third wavelength from a light output from said second semiconductor optical amplifying element, and outputting said light of said first or third wavelength.

3. An optical control device **characterized by** comprising:
an optical amplifying element operable to receive an input light of a second wavelength and intensity-modulate a light having a wavelength within a wavelength band which includes the wavelength of said input light and in which said optical amplifying element has an amplification gain, such that said light having the wavelength within said wavelength band is intensity-modulated in response to a variation in an intensity of said input light;
an optical inputting element operable to input to said optical amplifying element a light of a first wavelength within said wavelength band in which said optical amplifying element has the amplification gain; and
an optical filtering element operable to extract the light of said first wavelength from a light output from said optical amplifying element, and output the extracted light of said first wavelength as an output light.

4. An optical control device **characterized by** comprising:
a semiconductor optical amplifying element operable to receive an input light of a first wavelength and intensity-modulate a light having a wavelength within a wavelength band which includes the wavelength of said input light and in which said semiconductor optical amplifying element has an amplification gain, such that said light having the wavelength within said wavelength band is intensity-modulated in response to a variation in an intensity of said input light;
an optical inputting element operable to input to said semiconductor optical amplifying element a light of the first wavelength within said wavelength band in which said semiconductor optical amplifying element has the amplification gain; and
an optical filtering element operable to extract the light of said second wavelength from a light generated within said optical amplifying element, and output the extracted light of said second wavelength as an output light.

5. An optical control device **characterized by** comprising:
a first optical amplifying element operable to receive a first input light of a first wavelength and intensity-modulate a light having a wavelength within a wavelength band which includes the wavelength of said first input light and in which said first optical amplifying element has an amplification gain, such that said light having the wavelength within said wavelength band is intensity-modulated in response to a variation in an intensity of said first input light;
a first optical inputting element operable to input a laser light of a second wavelength within said neighboring wavelength band to said first optical amplifying element;
a first optical filtering element operable to extract the light of said second wavelength form a light output from said first optical amplifying element;
a second optical amplifying element operable to receive the light of the second wavelength extracted by said first optical filtering element, and intensity-modulate a light having a wavelength within a wavelength band which includes said second wavelength and in which said second optical amplifying element has an amplification gain, such that the light having the wavelength within said wavelength band including said second wavelength is intensity-modulated in response to a variation in an intensity of said second input light;
a second optical inputting element operable to input to said second optical amplifying element a laser light of said first wavelength or a laser light of a third wavelength within said wavelength band which includes said first wavelength and in which said second optical amplifying element has the amplification gain; and
a second optical filtering element operable to extract the light of said first or third wavelength from a light output from said second optical amplifying element, and output the light of said first or third wavelength.

6. An optical control device **characterized by** comprising:
a first semiconductor optical amplifying element operable to receive a first input light of a first wavelength and intensity-modulate a light having a wavelength within a wavelength band which includes the wavelength of said input light and in which said first semiconductor optical amplifying element has an amplification gain, such that said light having the wavelength within said wavelength band is intensity-modulated in response to a variation in an intensity of said first input light;
a first optical inputting element operable to input the light of said first wavelength to said first semiconductor optical amplifying element;
a first optical filtering element operable to extract a light of a second wavelength from a light which is generated within said first semiconductor optical amplifying element and which has the second wavelength within a wavelength band in which said first semiconductor optical amplifying element has an amplification gain, and output the extracted light as an output light;
a second semiconductor optical amplifying element operable to receive the light of the second wavelength extracted by said first optical filtering element, and intensity-modulate a light having a wavelength within a wavelength band which includes said second wavelength and in which said second semiconductor optical amplifying element has an amplification gain, such that the light having the wavelength within said wavelength band including said second wavelength is intensity-modulated in response to a variation in an intensity of said second input light;
a second optical inputting element operable to input to said second semiconductor optical amplifying element a laser light of said first wavelength or a laser light of a third wavelength within said wavelength band which includes said first wavelength and in which said second semiconductor optical amplifying element has the amplification gain; and
a second optical filtering element operable to extract the light of said first or third wavelength from a light output from said second semiconductor optical amplifying element, and output the light of said first or third wavelength.

7. An optical control device according to any one of claims 3-5, wherein said optical amplifying element is an optical fiber doped with a rare-earth element.

8. An optical control device according to claim 7, wherein said optical fiber doped with the rate-earth element is an optical fiber doped with erbium.

9. An optical control device according to any one of claims 4-6, wherein said semiconductor optical amplifying element is a semiconductor optical amplifying element operable to generate a light from a pn-junction portion thereof upon application of an electric current thereto.

10. An optical control device according to claim 9, wherein said semiconductor optical amplifying element is constituted by one of a semiconductor optical amplifying element of traveling-wave type, a semiconductor optical amplifying element of Fabry-Perot type, a semiconductor optical amplifying element of distributed feedback type, a semiconductor optical amplifying element of distributed Bragg reflector type, a semiconductor optical amplifying element of external-resonance type, and a semiconductor optical amplifying element of surface-emitting type.

11. An optical control device according to claim 9 or 10, wherein an active layer providing said pn junction portion is constituted by one of a quantum well, a quantum slit, a quantum chamber and a strained superlattice.

12. An optical control device according to any one of claims 3-6, wherein said optical filtering element is constituted by an optical fiber or waveguide having a portion a refractive index of which is periodically changed in a longitudinal direction thereof.

13. An optical control device according to any one of claims 3-6, wherein said optical filtering element is provided by forming alternate projections and recessed periodically on a surface of a waveguide in a longitudinal direction thereof.

14. An optical control device according to any one of claims 3-6, wherein said optical filtering element is constituted by a multiplicity of layers which are superposed on each other and which have respective different refractive index values.

15. An optical control device according to any one of claims 3-6, wherein said optical inputting element is constituted by one of an optical coupler, a directional coupler and an optical circulator.
